# EUROPÄISCHE PATENTSCHRIFT

(11) **EP 0 344 397 B1**
(45) Veröffentlichungstag und Bekanntmachung des Hinweises auf die Patenterteilung: **17.03.1993**
(21) Anmeldenummer: 89100762.7
(22) Anmeldetag: 18.01.1989
(51) Int. Cl.: F25B 49/00, F25B 41/04, F25B 41/06, B01L 7/00

(54) **Klimaprüfkammer**
Climatic test chamber
Chambre d'essai climatique

(30) Priorität: 30.05.1988 DE 3818321
(43) Veröffentlichungstag der Anmeldung: 06.12.1989
(73) Patentinhaber: Heraeus-Vötsch GmbH, D-63450 Hanau (DE)
(72) Erfinder: Ruoss, Hermann, D-7460 Balingen (DE); Hezel, Werner, D-7460 Balingen (DE)
(74) Vertreter: Heinen, Gerhard, Dr.

(56) Entgegenhaltungen:
- WO-A-84/03933
- DE-A- 1 501 067
- US-A- 4 674 292
- US-A- 4 771 610

## Beschreibung

Die Erfindung betrifft eine Klimaprüfkammer mit einem Nutzraum, in dem ein ein Kältemittel verdampfender Wärmetauscher angeordnet ist, mit einem Kompressor, dessen Saugseite mit dem Ausgang des Wärmetauschers verbunden ist und dessen Druckseite mit einem Kondensator in Verbindung steht, der ausgangsseitig über ein Absperr-Ventil in den Eingang des Wärmetauschers mündet, wobei das Absperrventil über einen Regler, der eine Eingangsgröße von einem im Nutzraum angeordneten ersten Temperaturfühler erhält, angesteuert wird, und mit einer nach dem Wärmetauscher angeordneten Überhitzungsüberwachungseinrichtung.

Weiterhin betrifft die Erfindung ein Verfahren zum Regeln des Kältemittelkreislaufes einer Klimaprüfkammer.

Wärmetauscher der eingangs beschriebenen Art sind beispielsweise aus der Produktinformation "Minitestkammern Baureihe VMT" (HVB D/GB/F 1200.1 20 C 4.86/N Ge) der Heraeus-Vötsch GmbH bekannt. Solche Klimaprüfkammern werden verwendet und haben sich im Einsatz gut bewährt. Um den Sicherheitsanforderungen an solche Klimaprüfkammern zu genügen, werden die einzelnen Komponenten der Kühleinrichtung nicht bis zu ihrer maximal möglichen Leistung betrieben. Diese maximalmögliche Leistung wird ohnehin durch dasjenige Bauteil festgelegt, das den kritischsten Punkt dieser Anlage darstellt.

Aus der US-A-4,674,292 ist eine Anordnung zur Steuerung des Kühlmittelflusses eines Kühlgerätes, beispielsweise eines Kühlschrankes, bekannt. Diese Anordnung verwendet einen Kältemittelkreislauf mit einem Kompressor und einen direkt nachgeschalteten Kondensator, wobei der Kühlmittelfluß zu dem im Kühlraum angeordneten Wärmetauscher über ein mit Schrittmotor versehenes Expan-sions-Ventil eingestellt wird. Dieses Ventil wird von einem Regler angesteuert, der Temperatur-Istwerte aus dem Kühlraum aufnimmt und mit einem vorgegebenen Temperatur-Sollwert vergleicht. Weiterhin werden dem Regler Temperaturwerte aus der Kühlmittelleitung unmittelbar vor und nach dem Verdampfer als Hilfsregelgrößen zugeführt; hierbei handelt es sich um einen sogenannten vermaschten Regelkreis.

Aus der DE-A-15 01 067 ist ein Verfahren zur Temperaturregelung, insbesondere von Kühlschränken, bekannt, bei dem durch eine elektronische Analogwertregelung die zugeführte Kältemenge in Abhängigkeit von einem Temperatursollwert, einem kontinuierlich gemessenen Temperatur-Istwert und einem der erzeugten Kältemenge analogen Meßwert geregelt wird; hierzu wird die Ermittlung des Drucks im Kompressionsteil und/oder im Verdampferteil des Kälteaggregats angegeben, wobei durch Drehzahlregelung des Kpmpressormotors die produzierte Kältemenge dem Kältebedarf entsprechend erhöht bzw. gesenkt wird.

Der vorliegenden Erfindung liegt nun die Aufgabe zugrunde, ausgehend von dem vorstehend beschriebenen Stand der Technik, eine Klimaprüfkammer sowie ein Verfahren zum Regeln einer solchen Klimaprüfkammer anzugeben, die bzw. das eine höhere Kühlleistung unter gleichbleibender Kompressorgröße ermöglicht, ohne daß hierbei die Sicherheitsgrenzen der einzelnen Bauteile überschritten werden.

Diese Aufgabe wird bei einer Klimaprüfkammer der eingangs beschriebenen Art dadurch gelöst, daß das Absperr-Ventil ein erstes mit einem Schrittmotor angetriebenes quasi-stetiges Expansions-Ventil ist und daß auf der Druckseite des Kompressors ein Kondensationsdruckmeßfühler angeordnet ist, der mit dem ersten Expansions-Ventil einen Regelkreis zur Regelung (Verstellung) des ersten Expansionsventils derart bildet, daß ein zulässiger Kondensationsdruck nicht überschritten wird.

Verfahrensgemäß wird die Aufgabe dadurch gelöst, daß der Kühlbedarf im Nutzraum als Sollwert dem Regler vorgegeben und mit dem über den ersten Temperaturfühler im Nutzraum ermittelten Istwert verglichen wird, wobei je nach Größe der Abweichung über den Regler das erste Expansions-Ventil entsprechend dem Kältemittelbedarf geöffnet oder geschlossen wird und wobei die maximale Belastbarkeit des Kompressors über einen saugseitigen Überwachungs-Temperaturfühler der Überhitzungsüberwachungseinrichtung erfaßt und im Falle einer zu starken Überhitzung eingangsseitig des Kompressors eine Direkteinspritzung des Kältemittels von der Druckseite in die Saugseite des Kompressors über das zweite Expansions-Ventil vorgenommen wird, daß der Regler das erste Expansions-Ventil schrittweise öffnet oder schließt und saugseitig des Kompressors über den weiteren Temperaturfühler die Temperatur des aus dem Wärmetauscher zurückgeführten Kältemittels überwacht und bei Überschreitung eines vorgegebenen Grenzwertes das zweite Expansions-Ventil schrittweise öffnet und Kältemittel der Saugseite des Kompressors unmittelbar zuführt, wobei unterhalb der für den Kompressor spezifischen, kritischen Überhitzungstemperatur das zweite Expansions-Ventil schrittweise wieder geschlossen wird, und daß zur Begrenzung des Kondensationsdruckes auf der Druckseite des Kompressors unter Ausnutzung der vollen Kompressorleistung als Funktion der Umgebungstemperatur der Druck in der Kühlmittelleitung druckseitig des Kompressors ständig überwacht und bei einem Ansteigen oder Abfallen des Druckes über oder unter einen vorgegebenen Grenzwert das erste Expansions-Ventil schrittweise zur Senkung oder Erhöhung des Druckes geschlossen oder geöffnet wird, um den eingestellten maximal zulässigen Kondensationsdruck In einem Gleichgewicht zu halten.

Wesentlich ist, daß durch das Zusammenspiel zwischen den einzelnen Baukomponenten, d.h. dem ersten Temperaturfühler im Nutzraum der Prüfkammer, dem ersten motorisch angetriebenen quasi-stetigen Expansions-Ventil und dem Kompressor sowie der Überhitzungsüberwachungseinrichtung, die bevorzugt einen Temperaturfühler und einen Druckfühler umfaßt, mit dem Regler ein stetiges Regelverhalten mit Regelzyklen in sehr kurzen Zeitintervallen erreicht werden kann, so daß die jeweiligen Regelabweichungen vom eingestellten Sollwert minimiert sind. Der Kühlmittelfluß zwischen der Druckseite des Kompressors und dem Eingang des Wärmetauschers kann dosiert, d.h. unter geringen Änderungen der Durchflußmenge durch das motorisch angetriebene quasi-stetige Expansions-Ventil eingestellt werden. Da die Regelzyklen in sehr kurzen Zeitintervallen wiederholt werden, sind die zu ändernden Durchflußmengen sehr gering. Die Leistung des Kältekreislaufes ist an der Leistung des Kompressors orientiert, der einerseits eine ausreichende Kälteleistung erreichen soll, der aber andererseits zur Erhöhung des Wirkungsgrades der Anlage nicht überdimensioniert sein darf. Daher ist es von Vorteil, daß als Regelgröße die Werte, die sich aus der Betriebsgrenztemperaturüberwachung des Kompressors ergeben, einbezogen werden. Für einen großen Kältebedarf wird der Kompressor zwar mit seiner maximalen Kühlleistung betrieben, aber nur für eine solche Dauer, daß die kritische Betriebsgrenztemperaturüberwachung noch unterschritten wird, ein Ausfall des Kompressors durch Überhitzung wird dadurch vermieden. Zur Ausnutzung der Kompressorleistung, auch in Abhängigkeit der jeweiligen Umgebungstemperatur des Kompressors, wird über einen dem Kompressor nachgeschalteten Druckfühler der Druck überwacht und die Temperatur des komprimierten Kältemittels zur Begrenzung der Kompressortemperatur über diesen Druck ermittelt.

Der Einsatz eines motorisch angetriebenen quasi-stetigen Expansions-Ventils bringt den Vorteil mit sich, daß ein Öffnen und Schließen des Ventils auch im Bereich tiefer Temperaturen unkritisch ist. Quasi-stetige Expansions-Ventile besitzen eine Ventilnadel, die sich in den Durchflußkanal hineinschieben und diesen schließen oder öffnen. Zum verfahren der Ventilnadel ist an deren Ende eine Spindel angeordnet, die in ihrer Stellung über einen Schrittmotor verändert wird. Herkömmliche Expansionsventile haben im Gegensatz dazu Metallstößel, die die Steuerbewegung der Membrane auf die Ventilnadel übertragen. Die Metallstößel neigen bei tiefen Temperaturen wegen der entsprechenden Viskosität des Öls zum Klemmen, wa zum Versagen des Kreislaufes führt.

In einer vorteilhaften Weiterbildung der Erfindung ist zwischen dem Eingang des ersten Expansions-Ventils und in Strömungsrichtung des Kühlmediums gesehen nach der Überhitzungsüberwachungseinrichtung ein zweites motorisch angetriebenes quasi-stetiges Expansions-Ventil angeordnet, das von dem Regler in Abhängigkeit des Signals eines weiteren Temperaturfühlers, der saugseitig des Kompressors angeordnet ist, steuerbar ist. Mit dieser Anordnung kann die Sauggastemperatur überwacht und, falls diese ansteigt, dosiert Kältemittel direkt der Saugseite des Kompressors eingespritzt werden. Hierzu wird aber über das zweite motorisch angetriebene quasi-stetige Expansions-Ventil nur eine solche Menge an Kältemittel abgezweigt, die nötig ist, um die Sauggastemperatur unterhalb des kritischen Wertes abzusenken. Die Sauggastemperatur wird jeweils durch den unmittelbar vor dem Eingang des Kompressors angeordneten weiteren Temperaturfühler ermittelt und als Signal im Regler verarbeitet. Die beschriebene Rückeinspritzung, die über das zweite Expansions-Ventil erfolgt, hat durch die quasi-stetige Regelmöglichkeit den Vorteil, daß nur eine solche Menge an Kühlflüssigkeit der Saugseite des Kompressors zugeführt wird, die ein Überschreiten der kritischen Temperatur des Kompressors (Betriebsgrenztemperatur) verhindert. Im Vergleich hierzu wurde gemäß dem Stand der Technik jeweils eine konstante Menge an Kühlmedium zurückgeführt, auch dann, wenn nur geringe Mengen notwendig gewesen wären.

Bevorzugt besteht die Überhitzungsüberwachungseinrichtung für den Wärmetauscher aus einem Überwachungs-Temperaturfühler und einem Überwachungs-Druckfühler, die unmittelbar in Strömungsrichtung gesehen dem Wärmetauscher nachgeordnet sind. Eine diese zwei Fühler umfassende Überwachungseinrichtung hat den Vorteil, daß sie sehr feinfühlig arbeitet und exakte Werte liefert, da als Regelgröße für die Überhitzung die Differenz zwischen der sich über den Temperaturfühler gemessenen Temperatur und der Temperatur, die sich als Funktion des über den Druckfühler gemessenen Wertes ergibt, herangezogen wird. Dieser Differenzwert kann beispielsweise bei etwa 5 Kelvin liegen.

Um den Kompressor gegen einen zu tiefen Saugdruck zu schützen, ist saugseitig des Kompressors in Strömungsrichtung gesehen vor der Zuleitung des zweiten Expansions-Ventils und druckseitig des Kompressors vor dem Kondensator eine diese Stellen verbindende absperrbare Bypass-Leitung angeordnet. Falls der Saugdruck unterhalb eines vorgegebenen Wertes absinkt (unter zu tiefem Saugdruck könnte die Wicklung des Kompressor-Motors überhitzt werden), wird das Ventil der Bypass-Leitung geöffnet und Kältemittelgas direkt druckseitig des Kompressors in die Saugleitung eingespeist.

Soweit die Merkmale nach den Verfahrensansprüchen nicht bereits vorstehend erläutert sind, ergibt sich der verfahrensablauf aus der nachfolgenden Beschreibung eines Ausführungsbeispieles anhand der Zeichnung. In der Zeichnung zeigt
- Figur 1: schematisch eine Klimaprüfkammer mit einem Kältemittelkreislauf und
- Figur 2: ein Ablaufdiagramm zum Regeln eines Kältemittelkreislaufes, wie er in der Figur 1 in seinen Baukomponenten gezeigt ist.

Die Klimaprüfkammer 1 ist in einen Nutzraum 2, der über eine Tür 3 zugänglich ist, und in einen Luftbehandlungsraum 4 unterteilt. In dem Luftbehandlungsraum 4, der im Bereich der Decke und des Bodens der Klimaprüfkammer mit dem Nutzraum 2 strömungsmäßig verbunden ist, ist ein Wärmetauscher 5 angeordnet. Ausgangsseitig, d.h. am unteren Ende, ist der Wärmetauscher 5 über eine Saugleitung 6 mit der Saugseite eines Kompressors 7 verbunden, dessen Druckseite über einen Kondensator 8, einen Kältemittelsammler 9 und einen Trockner 10 mit dem Eingang des Wärmetauschers 5 verbunden ist. Ein erstes motorisch angetriebenes quasi-stetiges Expansions-Ventil 11 ist unmittelbar vor dem Eingang des Wärmetauschers 5 in die Saugleitung 6 eingefügt. Ober dieses Ventil 11 kann der Kühlmittelfluß zu dem Wärmetauscher 5 verändert werden. Ein zweites motorisch angetriebenes quasi-stetiges Expansions-Ventil 12 verbindet die Druckseite des Kompressors 7 mit der Saugleitung 6, und zwar an einer Stelle zwischen dem Trockner 10 und dem ersten Ventil 11. Über dieses zweite Ventil 12 kann Kältemittel, das über den Kondensator 8 verflüssigt wurde, unmittelbar der Saugseite des Kompressors 7 wieder zugeführt werden, wo es durch Verdampfen die Kühlung des Sauggases und des Kompressor bewirkt.

Der Kältemittelkreislauf wird über einen Regler 13 gesteuert, der die Istwert-Temperatur im Nutzraum 2 über einen darin angeordneten ersten Temperaturfühler 14 erhält. Sowohl das erste Ventil 11 als auch das zweite Ventil 12 werden über den Regler 13 schrittweise geöffnet oder geschlossen.

Zur Überhitzungsüberwachung des Wärmetauschers 5 sind ausgangsseitig des Wärmetausches 5 ein Überwachungs-Temperaturfühler 15 sowie ein Oberwachungs-Druckfühler 16 angeordnet, die die Temperatur des Kältemittels ausgangsseitig des Wärmetauschers 5 sowie den Druck in der Kühlmittel- oder Saugleitung 6 überwachen und entsprechende Signale dem Regler 13 zuführen. Zur Überwachung der Sauggastemperatur des Kompressors 7 ist saugseitig des Kompressors ein weiterer Temperaturfühler 17, und zwar in Strömungsrichtung des Kühlmediums gesehen nach dem Überwachungs-Temperaturfühler 15 und dem Überwachungs-Druckfühler 16, angeordnet. Ein Kondensationsdruckmeßfühler 18, der zur Überprüfung des maximalen Sauggasdruckes des Kompressors 7 dient, ist druckseitig des Kompressors 7 in Strömungsrichtung gesehen vor dem Kondensator 8 angeordnet. Auch der weitere Temperaturfühler 17 sowie der weitere Druckfühler 18 liefern ein weiteres Eingangssignal an den Regler 13. Um im Falle eines zu tiefen Saugdruckes des Kompressors 7 eingreifen zu können, ist eine Bypass-Leitung 19 vorgesehen, die den Kompressor 7 und die Kühlmittelleitung 6 von einer Stelle zwischen dem Überwachungsdruckfühler 16 und dem weiteren Temperaturfühler 17 zu der Druckseite des Kompressors 7 hin überbrückt. Diese Bypass-Leitung 19 kann über ein zusätzliches motorisch angetriebenes quasi-stetiges Expansions-Ventil 20 geschlossen oder geöffnet werden.

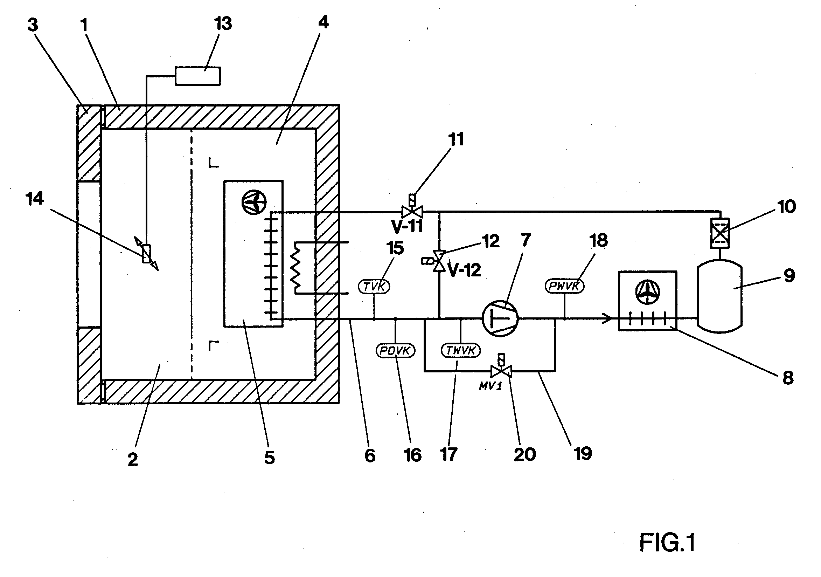

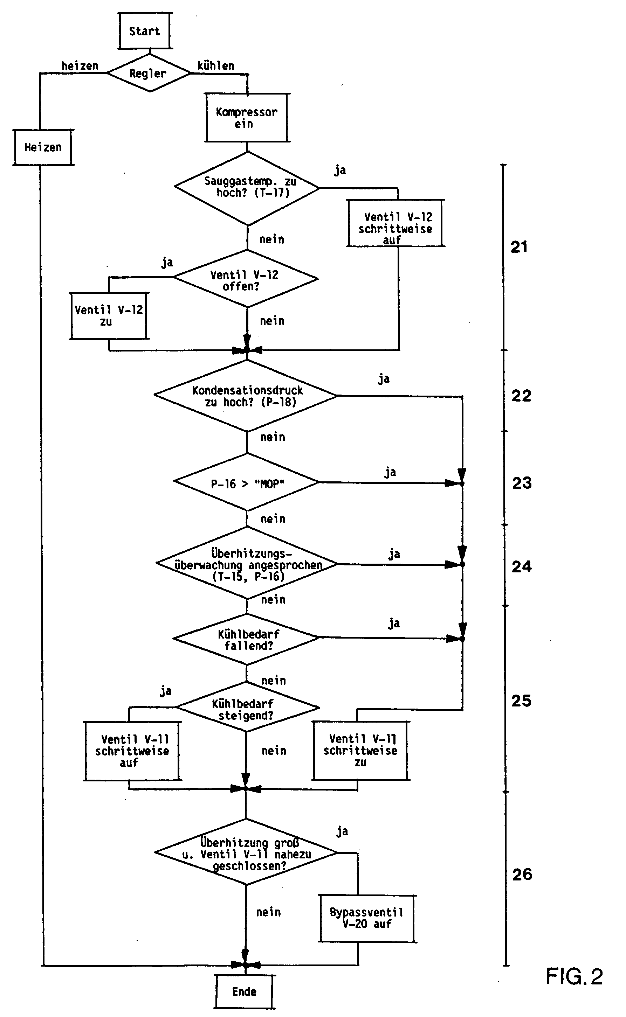

Die Figur 2 zeigt den Funktionsablauf des Kältekreislaufes der Klimaprüfkammer in seiner einfachsten Form, wobei die Bauteile vorstehend anhand der Figur 1 beschrieben wurden. Zunächst wird der Regler 13 gestartet und der Soll-Ist-Vergleich der Temperatur des Nutzraumes 2 ermittelt, wobei der Ist-Wert durch den im Nutzraum 2 angeordneten ersten Temperaturfühler 14 abgefragt wird. Falls dieser Vergleich zu dem Ergebnis führt, daß die Temperatur im Nutzraum 2 zu hoch ist, wird ein Kühlvorgang eingeleitet, indem zunächst der Kompressor 7 eingeschaltet wird, so daß das im Kühlkreislauf befindliche Kältemittel umgewälzt und dem Nutzraum 2 über den Wärmetauscher 5, der Bestandteil des Kühlkreislaufes ist, Kältemittel zugeführt wird. Das durch den Wärmetauscher 5 strömende und dort verdampfende Kältemittel wird saugseitig dem Kompressor 7 wieder zugeführt. Je nach Größe der Aufheizung des Kältemittels nach Durchströmen des Wärmetauschers 5 wird der weitere Temperaturfühler 17 angesprochen. Falls dies der Fall ist, d.h. falls die Temperatur des Sauggases über einen im Regler 13 vorgegebenen Grenzwert ansteigt, wird das zweite Ventil 12 (V-12) geöffnet und der Saugseite des Kompressors 7 unmittelbar Kältemittel, bevor dieses dem Eingang des Wärmetauschers 5 im Luftbehandlungsraum 4 zugeführt wird, direkt zugeführt, so daß dadurch die Temperatur des Kältemittels herabgesenkt werden kann; auf diese Weise wird eine Überhitzung des Kompressors 7 vermieden werden. Durch den Einsatz eines motorisch angetriebenen quasi-stetigen Expansions-Ventils als Ventil 12 kann das Kältemittel dosiert, d.h. in der jeweils erforderlichen Menge, abgezweigt werden. Falls eine ausreichende Kühlung erfolgt ist (unterhalb einer vorgegebenen unkritischen Temperatur eingangsseitig des Kompressors), wird das Ventil 12, wie es das Diagramm zeigt, wieder geschlossen. Die vorstehend beschriebene Überwachung der Sauggastemperatur hat weiterhin die Aufgabe, das Zersetzen des Kältemittels während der Kompression infolge einer zu hohen Kompressionstemperatur (in Abhängigkeit des Kältemittels beispielsweise bei 170 °C) zu vermeiden. Dieser Abschnitt der Überwachung der Sauggastemperatur des Kompressors 7 ist in dem Diagramm mit 21 bezeichnet.

Die sich daran anschließende Abfrage (Abschnitt 22) nach dem Kondensationsdruck über den Kondensationsdruckmeßfühler 18 (P-18) dient dazu, den Kondensationsdruck auf der Druckseite des Kompressors 7 zu begrenzen, aber gleichzeitig die volle Kompressorleistung als Funktion der Umgebungstemperatur auszunutzen. Falls über die Messung des Druckes durch den Kondensationsdruckmeßfühler 18 festgestellt wird, daß der Kondensationsdruck zu hoch ist, wird das erste Ventil 11 (V-11) schrittweise geschlossen, so daß unmittelbar der Druck gesenkt wird; dieser Regelungszyklus wiederholt sich, bis der eingestellte zulässige Kondensationsdruck in einem Gleichgewicht gehalten wird. Diese Kondensationsdruck-Überwachung hat die Aufgabe, daß der Druck im Leitungssystem nicht in unzulässiger Weise ansteigt und so die Sicherheit der Kühlvorrichtung gefährdet und gleichzeitig abhängig von den Randbedingungen des Kältekreislaufes (z.B. Umgebungstemperatur) die maximal möglich Kälteleistung zu erzeugen.

Als weitere Überwachungseinrichtung ist zum einen eine Begrenzung des maximalen Saugdruckes als Schutz für den Kompressor 7 vorgesehen (Abschnitt 23), weiterhin eine Überhitzungsüberwachung für den Wärmetauscher 5 (Abschnitt 24). Hierzu sind der Temperaturfühler 15 (T-15) und der Druckfühler 16 (T-16) nach dem Ausgang des Wärmetauschers 5 in das Leitungssystem eingefügt. Falls über den Druckfühler 16 festgestellt wird, daß der Druck in der Leitung ausgangsseitig des Wärmetauschers 5 über den maixmal zulässigen Betriebsdruck (MOP) ansteigt (der maximal zulässige Betriebsdruck ist von der Bauart des Kompressors 7 abhängig), wird ebenfalls das erste Ventil 11 schrittweise geschlossen. Die gleiche Maßnahme, d.h. die schrittweise Schließung des Ventils 11 erfolgt, falls die Überhitzungsüberwachung des Wärmetauschers 5 (Abschnitt 24) anspricht. Diese Überhitzungsüberwachungseinrichtung spricht immer dann an, wenn die Differenz zwischen der über den Temperaturfühler 15 gemessenen Temperatur und der Temperatur, die sich als Funktion des über den Druckfühler 16 gemessenen Druckes errechneten Temperatur, kleiner als ein vorgegebener Wert, beispielsweise 5 Kelvin, ist.

Nachdem nun die vorstehend beschriebenen Überwachungsfunktionen abgeprüft sind, wird der Kühlbedarf (Abschnitt 25) über einen Soll-Ist-Vergleich im Nutzraum 2 mittels des Nutzraums-Temperaturfühlers 14 überprüft. Falls der Kühlbedarf fallend ist, wird das Ventil 11 schrittweise geschlossen. Sollte jedoch die Temperatur im Nutzraum 2 steigend sein, so wird das Ventil 11 schrittweise geöffnet, um dem Wärmetauscher 5 größere Mengen an Kühlmittel zuzuführen.

Da der Fall auftreten kann, daß der Kältebedarf sehr gering ist und das Ventil 11 deshalb fast geschlossen wird, dadurch aber der Kompressor 7 nicht mehr ausreichend gekühlt wird, d.h. der Saugdruck des Kompressors 7 unterhalb eines Minimalwertes absinkt, ist eine Bypass-Leitung 19 vorgesehen, durch die über das zusätzliche Ventil 20 (V-20) auf der Druckseite des Kompressors 7 direkt Kältemittel der Saugseite des Kompressors 7 zugeführt werden kann, so daß der erforderliche minimale Saugdruck auf der Saugseite des Kompressors 7 eingehalten werden kann (Abschnitt 26).

In dem Ablaufdiagramm ist neben der ausführlich beschriebenen Regelung der Kühlung auch die über den Regler 13 gesteuerte Aufheizung des Nutzraumes 2 durch den linken Ast angedeutet.

## Patentansprüche

1. Klimaprüfkammer mit einem Nutzraum (2), in dem ein ein Kältemittel verdampfender Wärmetauscher (5) angeordnet ist, mit einem Kompressor (7), dessen Saugseite mit dem Ausgang des Wärmetauschers (5) verbunden ist und dessen Druckseite mit einem Kondensator (8) in Verbindung steht, der ausgangsseitig über ein Absperr-Ventil (11) in den Eingang des Wärmetauschers (5) mündet, wobei das Absperr-Ventil (11) über einen Regler (13), der eine Eingangsgröße von einem im Nutzraum (2) angeordneten ersten Temperaturfühler (14) erhält, angesteuert wird, und mit einer nach dem Wärmetauscher (5) angeordneten Überhitzungsüberwachungseinrichtung (15, 16), dadurch gekennzeichnet, daß das Absperr-Ventil ein erstes mit einem Schrittmotor angetriebenes quasi-stetiges Expansions-Ventil (11) ist und daß auf der Druckseite des Kompressors (7) ein Kondensationsdruckmeßfühler (18) angeordnet ist, der mit dem ersten Expansions-Ventil (11) einen Regelkreis zur Regelung (Verstellung) des ersten Expansionsventils (11) derart bildet, daß ein zulässiger Kondensationsdruck nicht überschritten wird.

2. Klimaprüfkammer nach Anspruch 1, dadurch gekennzeichnet, daß zwischen dem Eingang des ersten Expansions-Ventils (11) und in Strömungsrichtung des Kühlmediums gesehen nach der Überhitzungsüberwachungseinrichtung (15, 16) ein zweites mit einem Schrittmotor angetriebenes quasi-stetiges Expansions-Ventil (12) und saugseitig des Kompressors (7) ein weiterer Temperaturmeßfühler (17) angeordnet sind, wobei das zweite Expansions-Ventil (12) von dem Regler (13) in Abhängigkeit des Signals des weiteren Temperaturfühlers (17) steuerbar ist.

3. Klimaprüfkammer nach Anspruch 2, dadurch gekennzeichnet, daß saugseitig des Kompressors (7) in Strömungsrichtung gesehen vor der Zuleitung des zweiten Expansions-Ventils (12) und druckseitig des Kompressors (7) vor dem Kondensator (8) eine diese Stellen verbindende, durch ein zusätzliches Ventil (20) absperrbare Bypass-Leitung (19) angeordnet ist.

4. Klimaprüfkammer nach Anspruch 3, dadurch gekennzeichnet, daß das zusätzliche Ventil (20) ein mit einem Schrittmotor angetriebenes quasi-stetiges Expansions-Ventil ist.

5. Verfahren zum Regeln des Kältemittelkreislaufes einer Klimaprüfkammer nach Anspruch 2, dadurch gekennzeichnet, daß der Kühlbedarf im Nutzraum als Sollwert dem Regler vorgegeben und mit dem über den ersten Temperaturfühler im Nutzraum ermittelten Istwert verglichen wird, wobei je nach Größe der Abweichung über den Regler das erste Expansions-Ventil entsprechend dem Kältemittelbedarf geöffnet oder geschlossen wird und wobei die maximale Belastbarkeit des Kompressors über einen saugseitigen Überwachungs-Temperaturfühler der Überhitzungsüberwachungseinrichtung erfaßt und im Falle einer zu starken Überhitzung eingangsseitig des Kompressors eine Direkteinspritzung des Kältemittels von der Druckseite in die Saugseite des Kompressors über das zweite Expansions-Ventil vorgenommen wird, daß der Regler das erste Expansions-Ventil schrittweise öffnet oder schließt und saugseitig des Kompressors über den weiteren Temperaturfühler die Temperatur des aus dem Wärmetauscher zurückgeführten Kältemittels überwacht und bei Überschreitung eines vorgegebenen Grenzwertes das zweite Expansions-Ventil schrittweise öffnet und Kältemittel der Saugseite des Kompressors unmittelbar zuführt, wobei unterhalb der für den Kompressor spezifischen, kritischen Überhitzungstemperatur das zweite Expansions-Ventil schrittweise wieder geschlossen wird, und daß zur Begrenzung des Kondensationsdruckes auf der Druckseite des Kompressors unter Ausnutzung der vollen Kompressorleistung als Funktion der Umgebungstemperatur der Druck in der Kühlmittelleitung druckseitig des Kompressors ständig überwacht und bei einem Ansteigen oder Abfallen des Druckes über oder unter einen vorgegebenen Grenzwert das erste Expansions-Ventil schrittweise zur Senkung oder Erhöhung des Druckes geschlossen oder geöffnet wird, um den eingestellten maximal zulässigen Kondensationsdruck in einem Gleichgewicht zu halten.

6. Verfahren nach Anspruch 5, dadurch gekennzeichnet, daß zur Begrenzung des maximalen Saugdruckes zum Schutz des Kompressors eingangsseitig des Kompressors der Druck erfaßt und bei einem Ansteigen des Druckes über den maximal zulässigen Betriebsdruck des Kompressors das erste Expansions-Ventil schrittweise geschlossen wird.

7. Verfahren nach Anspruch 5 oder 6, dadurch gekennzeichnet, daß zur Überhitzungsüberwachung des Wärmetauschers bei einem Absenken der Temperaturdifferenz, die sich aus der ausgangsseitig des Wärmetauschers gemessenen Temperatur und der Temperatur, die sich als Funktion des Druckes in der Kühlmittelleitung ausgangsseitig des Wärmetauschers ergibt, errechnet, unterhalb eines vorgegebenen Wertes das erste Expansions-Ventil schrittweise geschlossen wird.

8. Verfahren nach einem der Ansprüche 5 bis 7, dadurch gekennzeichnet, daß bei einem Absenken des Saugdruckes des Kompressors unterhalb eines vorgegebenen Minimalwertes der Eingangsseite des Kompressors unmittelbar Kühlmittel von der Ausgangsseite des Kompressors in einer Rückführung zugeführt wird.

## Claims

1. Climatic test chamber with a work space (2) in which is arranged a heat exchanger (5) which evaporates a refrigerant, with a compressor (7) the suction side of which is connected to the output of the heat exchanger (5) and the pressure side of which is connected to a condenser (8) which on the output side opens out via a shut-off valve (11) into the input of the heat exchanger (5), wherein the shut-off valve (11) is controlled by a regulator (13) which receives an input quantity from a first temperature sensor (14) arranged in the work space (2), and with an overheating monitoring device (15,16) arranged after the heat exchanger (5), characterised in that the shut-off valve is a first quasi-continuously acting expansion valve (11) driven with a stepping motor and in that on the pressure side of the compressor (7) is arranged a condensation pressure measuring sensor (18) which with the first expansion valve (11) forms a regulating circuit for regulating (adjusting) the first expansion valve (11) in such a way that a permitted condensation pressure is not exceeded.

2. Climatic test chamber according to claim 1, characterised in that between the input of the first expansion valve (11) and, as seen in the direction of flow of the cooling medium, after the overheating monitoring device (15,16), is arranged a second quasi-continuously acting expansion valve (12) driven with a stepping motor, and on the suction side of the compressor (7) is arranged a further temperature measuring sensor (17), wherein the second expansion valve (12) can be controlled by the regulator (13) as a function of the signal of the additional temperature sensor (17).

3. Climatic test chamber according to claim 2, characterised in that on the suction side of the compressor (7), as seen in the direction of flow before the supply pipe of the second expansion valve (12), and on the pressure side of the compressor (7) before the condenser (8), is arranged a bypass pipe (19) which connects these points and can be shut off by an additional valve (20).

4. Climatic test chamber according to claim 3, characterised in that the additional valve (20) is a quasi-continuously acting expansion valve driven with a stepping motor.

5. Method for regulating the refrigerant circuit of a climatic test chamber according to claim 2, characterised in that the cooling requirements in the work space are preset for the regulator as a nominal value and compared with the actual value determined by means of the first temperature sensor in the work space, wherein depending on the quantity of the deviation by means of the regulator the first expansion valve is opened or closed according to the refrigerant requirements and wherein the maximum loading capacity of the compressor is detected by means of a monitoring temperature sensor of the overheating monitoring device, which is on the suction side, and in case of excessive overheating on the input side of the compressor there is direct injection of the refrigerant from the pressure side into the suction side of the compressor via the second expansion valve, in that the regulator opens or closes the first expansion valve stepwise and on the suction side of the compressor by means of the further temperature sensor the temperature of the refrigerant returned from the heat exchanger is monitored and, on exceeding a preset threshold value, the second expansion valve opens stepwise and supplies refrigerant directly to the suction side of the compressor, wherein below the critical overheating temperature which is specific to the compressor, the second expansion valve is closed again stepwise, and in that to limit the condensation pressure on the pressure side of the compressor, utilising the full compressor capacity, as a function of the ambient temperature the pressure in the coolant pipe on the pressure side of the compressor is monitored constantly and, if the pressure rises above or falls below a preset threshold value, the first expansion valve is closed or opened stepwise to lower or raise the pressure, in order to keep the set maximum permitted condensation pressure in equilibrium.

6. Method according to claim 5, characterised in that to limit the maximum suction pressure, to protect the compressor on the input side of the compressor the pressure is detected and, if the pressure rises above the maximum permitted operating pressure of the compressor, the first expansion valve is closed stepwise.

7. Method according to claim 5 or 6, characterised in that to monitor overheating of the heat exchanger, in case of a decrease in the temperature difference calculated from the temperature measured on the output side of the heat exchanger and the temperature resulting as a function of the pressure in the coolant pipe on the output side of the heat exchanger, below a preset value, the first expansion valve is closed stepwise.

8. Method according to any of claims 5 to 7, characterised in that if the suction pressure of the compressor drops below a preset minimum value of the input side of the compressor, coolant is supplied directly from the output side of the compressor in a feed-back.

## Revendications

1. Chambre d'essai climatique comportant un espace utile (2), dans lequel est disposé un échangeur de chaleur (5) qui vaporise un fluide réfrigérant, comportant un compresseur (7), dont le côté admission est relié avec la sortie de l'échangeur de chaleur (5) et dont le côté refoulement est relié avec un condenseur (8) qui, du côté de la sortie, débouche dans l'entrée de l'échangeur de chaleur (5) en passant par une vanne d'arrêt (11), étant précisé que la vanne d'arrêt (11) est pilotée par l'intermédiaire d'un régulateur (13) qui reçoit une grandeur d'entrée de la part d'un premier détecteur de température (14) disposé dans l'espace utile (2), et comportant un dispositif (15,16) de surveillance d'une surchauffe, disposé après l'échangeur de chaleur (5), chambre d'essai caractérisée par le fait que la vanne d'arrêt est une première vanne d'expansion quasi-continue (11) entraînée par un moteur pas à pas et par le fait que du côté refoulement du compresseur (7) est disposé un détecteur (18) de mesure de la pression de condensation qui, avec la première vanne d'expansion (11), forme un circuit de régulation pour la régulation (le changement de position de réglage) de la première vanne d'expansion (11) de façon à ne pas laisser dépasser une pression de condensation autorisée.

2. Chambre d'essai climatique selon la revendication 1, caractérisée par le fait qu'entre l'entrée de la première vanne d'expansion (11) et après, vu dans le sens de l'écoulement du fluide réfrigérant, le dispositif (15,16) de surveillance d'une surchauffe sont disposés une seconde vanne d'expansion quasi-continue (12), entraînée par un moteur pas à pas et, du côté admission du compresseur (7), un autre détecteur (17) de mesure de la température, étant précisé que la seconde vanne d'expansion (12) peut être pilotée par le régulateur (13) en fonction du signal de l'autre détecteur de température (17).

3. Chambre d'essai climatique selon la revendication 2, caractérisée par le fait que, du côté admission du compresseur (7), avant, vu dans le sens de l'écoulement, la conduite de dérivation de la seconde vanne d'expansion (12) et côté refoulement du compresseur (7), avant le condenseur (8), est disposée une conduite de bypass (19) qui relie ces endroits et peut être verrouillée par une vanne supplémentaire (20).

4. Chambre d'essai climatique selon la revendication 3, caractérisée par le fait que la vanne supplémentaire (20) est une vanne d'expansion quasi-continue entraînée par un moteur pas à pas.

5. Procédé de régulation du circuit du fluide réfrigérant d'une chambre d'essai climatique selon la revendication 2, caractérisé par le fait que le besoin en froid dans l'espace utile est prescrit au régulateur sous forme de valeur prescrite et qu'il est comparé avec la première valeur réelle déterminée dans l'espace utile au moyen du premier détecteur de température, étant précisé que selon chaque fois la valeur de l'écart, la première vanne d'expansion s'ouvre ou se ferme, par l'intermédiaire du régulateur, en fonction du besoin en fluide réfrigérant et étant précisé que la capacité maximale de charge du compresseur est saisie au moyen d'un détecteur de température de surveillance, disposé du côté admission, du dispositif de surveillance d'une surchauffe et qu'en cas de trop forte surchauffe du côté entrée du compresseur, il est procédé à une injection directe du fluide réfrigérant, depuis le côté refoulement du compresseur, dans le côté admission du compresseur, par l'intermédiaire de la seconde vanne d'expansion, par le fait que le régulateur ouvre ou ferme pas à pas la première vanne d'expansion et, du côté admission du compresseur, surveille, au moyen de l'autre détecteur de température, la température du fluide réfrigérant sortant de l'échangeur de chaleur et, en cas de dépassement d'une valeur limite prédéterminée, ouvre pas à pas la seconde vanne d'expansion et amène directement le fluide réfrigérant au côté admission du compresseur, étant précisé qu'en-dessous de la température critique de surchauffe, spécifique du compresseur, la seconde vanne d'expansion se ferme à nouveau pas à pas, et par le fait que pour limiter la pression de condensation du côté refoulement du compresseur tout en utilisant la totalité de la puissance du compresseur en fonction de la température ambiante, la pression dans la conduite du fluide réfrigérant, du côté refoulement du compresseur, est surveillée en permanence et, dans le cas où cette pression dépasse, par valeur croissante, une valeur limite prédéterminée, ou, par valeur décroissante, une valeur limite prédéterminée, la première vanne d'expansion se ferme ou s'ouvre pas à pas pour diminuer ou augmenter la pression pour maintenir en état d'équilibre la pression de condensation maximale autorisée prescrite.

6. Procédé selon la revendication 5, caractérisé par le fait que pour limiter la pression d'admission maximale, pour protéger le compresseur, la pression est saisie du côté entrée du compresseur et par le fait que dans le cas où la pression monte au-dessus de la pression d'exploitation maximale autorisée du compresseur la première vanne d'expansion se ferme pas à pas.

7. Procédé selon les revendications 5 ou 6, caractérisé par le fait que pour surveiller une surchauffe de l'échangeur de chaleur, en cas de diminution, en-dessous d'une valeur prescrite, de la différence de température qui se calcule à partir de la température mesurée du côté sortie de l'échangeur de chaleur et de la température qui s'obtient comme fonction de la pression régnant dans la conduite du fluide réfrigérant du côté sortie de l'échangeur de chaleur, la première vanne d'expansion se ferme pas à pas.

8. Procédé selon l'une des revendications 5 à 7, caractérisé par le fait que si la pression d'admission du compresseur s'abaisse en-dessous d'une valeur minimale prescrite du côté entrée du compresseur, le fluide réfrigérant est, depuis le côté sortie du compresseur, directement renvoyé dans le compresseur.
